# EUROPEAN PATENT SPECIFICATION

(11) **EP 2 695 697 B1**
(45) Date of publication and mention of the grant of the patent: **19.06.2019**
(21) Application number: 12184049.0
(22) Date of filing: 12.09.2012
(51) Int. Cl.: B23K 11/00, B23K 11/14, C04B 20/10, E04C 5/01

(54) **Metalized mesh for architectural constructions with a coating and method of producing such mesh through projection welding**
Metallisiertes Netz für architektonische Konstruktionen mit einer Beschichtung und Verfahren zur Erzeugung eines solchen Netzes durch Projektionschweissen
Maillage métallisé pour constructions architecturales ayant un revêtement et procédé de production de ce maillage par soudage par projection

(30) Priority: 06.08.2012 PL 40026012
(43) Date of publication of application: 12.02.2014
(73) Proprietor: Progress ECO Spolka z ograniczona odpowiedzialnoscia sp.k., 28-147 Tuczepy (PL)
(72) Inventor: Sawicz, Józef, 62-007 Biskupice (PL); Papkala, Hubert, 44-186 Gieraltowice (PL); Zajac, Krzysztof, 28-236 Rytwiany (PL)
(74) Representative: Patpol Kancelaria Patentowa Sp. z o.o.

(56) References cited:
- JP-A- H06 114 563
- JP-U- S 601 593
- US-A- 1 228 789
- US-A1- 2008 156 776

## Description

The subject invention provides a metalized grid for architectural structures for use mainly in building industry, and a method of manufacturing such grid for architectural structures according to the preamble of claims 1 and 6 (see, for example, JP H06 114 563 A). The grid according to the invention may be used as a component of a building facade, a masking frame, an electric fitting, a sewage system fitting, etc., or it can constitute a component of a fence, a protection sheath, a decorative element of modern interior designs having a form of a partition, a suspended ceiling or a wall. For all these applications the grid should meet several technical, aesthetical and economical requirements including a particularly high resistance to environmental corrosion, low weight, stiffness and flatness.

The desired properties of the grid have been obtained according to the invention due to the use of the carbon steel with a metallic coating for the manufacture of the grid as well as due to accumulation of the metallic coating mass in the projections of the welded elements of the grid. The carbon steel with a metallic coating provides the resistance to corrosion.

Grids made of rods are known in the art. The rods of such grids have longitudinal projections and the grids are made entirely of acid-resistant steel and they are manufactured according to a technique derived directly from the known slotted sieve manufacturing process. Due to a very high cost of these products resulting from the use of the stainless and acid-resistant steel, and because of limited formability of the rods, in particular thin-wall rods, as well as due to their considerable weight, this solution is not to be considered for such applications, in particular for large architectural structures.

It is an object of the invention to eliminate the above disadvantages and inconveniences of the known solutions of the architectural grids.

A metallized grid according to the present invention is defined in claim 1.

Preferably, also the welding projections of the supporting rods comprise at their welding site an accumulated mass of the metallic coating actively forming a shield for the weld during joining the front rods with the supporting rods of the grid by projection welding.

Preferably, the metallic coating of the grid is a zinc-aluminum alloy.

Preferably, the metallic coating of the grid is an aluminum-silicon alloy.

Preferably, the front rods of the grid have the same cross-section as the supporting rods.

A method of manufacturing a metallized grid according to the present invention is defined in claim 6.

When compared to the known grids, the architectural grid of the invention is considerably lighter and enables to considerably broaden the scope of the technical solutions in which it can be used. The grid of the invention is stiff, flat and capable of being made of rods distributed at any packing density, possibly until completely filling up the front surface of the grid with the rods. The use of the carbon steel as the basic material for the rods guarantees obtaining a lightweight and tough structure. Deformability of the carbon steel facilitates the production process to be improved. The structure of the grid enables introduction of a wide variety of color surfaces and is considerably cheaper. What is more, due to the increased mass of the metallic coating at the welding site an effective protection of welds against corrosion is obtained.

The grid according to the invention is shown in the appended drawing in which:
Fig. 1 shows a side view of the grid according to the invention;
Fig. 2 shows a top view of the grid according to the invention;
Fig. 3 shows a perspective view of a portion of a front rod;
Fig. 4 shows a joint of a front rod with a supporting rod of the grid in cross-section.

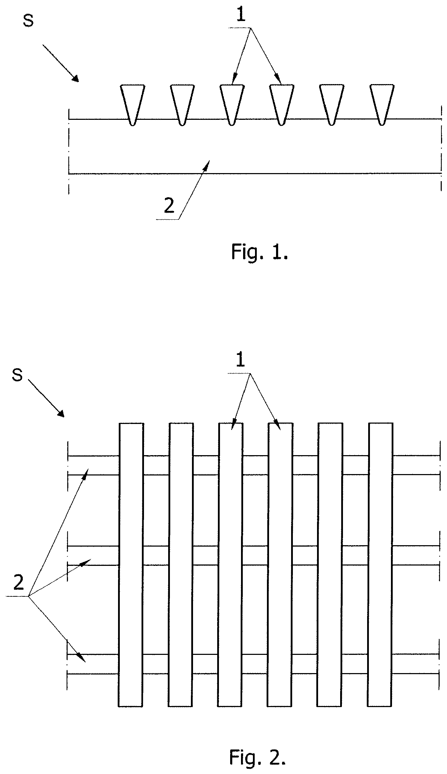

Fig. 1 shows a side view, and Fig. 2 shows a top view, of an embodiment of a grid S according to the invention. The grid S shown in the figures is composed of front rods 1 and supporting rods 2 extending substantially perpendicular to one another. Both the front rods 1 and the supporting rods 2 comprise a core of carbon steel covered with a metallic coating made e.g. by means of a metallurgical method. The metallic coating of the rods may be e.g. a zinc-aluminum or aluminum-silicon coating. For the purpose of the manufacture of the metalized architectural grids according to the invention both the front rods 1 and the supporting rods 2 may be rods of any cross-section that have continuous longitudinal projection-like protrusions constituting welding projections. Both the front rods 1 and the supporting rods 2 have, according to the present invention, the welding projections.

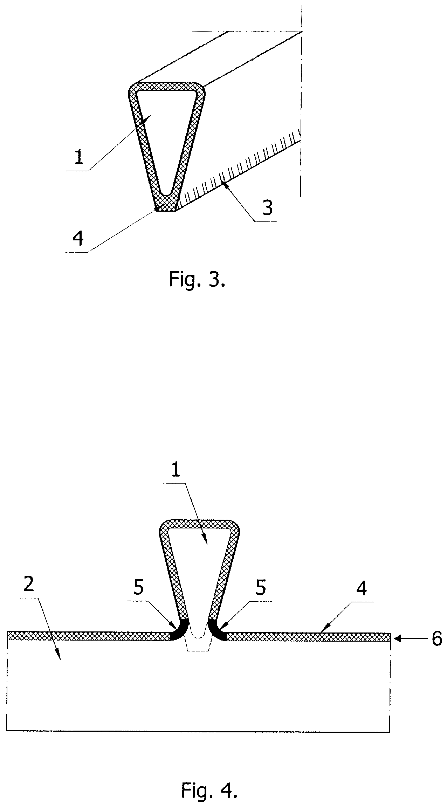

As shown in detail in Fig. 3, the front rods 1 have continuous longitudinal protrusions constituting welding projections 3 having on their contact surface of the welding site an accumulated mass of the metallic coating 4 which is bigger than the mass of the coating on the remaining surface of the rod. During joining the front rods 1 with the supporting rods 2 of the grid S by projection welding, the coating 4 is actively forming the sheaths of the welds 5, as shown in Fig. 4. The mass of the metallic coating 4 accumulated at the welding site is e.g. at least 20% bigger than the mass of the coating covering the remaining surface of the rod. Such accumulation of the coating mass guarantees a corrosion resistance of the joints which is as effective as the corrosion resistance of the remaining surfaces of the rods.

The welding projections 6 of the supporting rods 2 have an accumulated increased mass of the metallic coating. In an advantageous embodiment, the supporting rods 2 have the same cross-section as the front rods 1.

The components of the grids are welded by any suitable method, e.g. by resistance projection welding by means of the alternating or the direct current.

The corrosion resistance of the grid according to the invention has been tested in a salt chamber according to EN9227. During the test, a sample grid according to the invention remained in an environment of 5% aqueous NaCl solution, during a period of 480 h, at a temperature of 35°C±2°C. The grid treated with the NaCl solution in the aforementioned conditions has not shown, neither on the rod surfaces nor at their welding sites, any signs of structure corrosion processes that might exclude the grid form architectural applications.

The increase of the mass of the metallic coating at the welding area resulting in the protection of the rod joints against corrosion may be obtained by forming the rods by suitably combined methods of plastic forming, e.g.: rolling, pull broaching.

## Claims

1. A metalized grid for architectural structures, consisting of front rods and supporting rods crossing one another, the grid being made by projection welding of the front rods (1) with the supporting rods (2), the front rods and the supporting rods being made of metalized carbon steel with a metallic coating (4),
**characterised by** each front rod (1) and each supporting rod (2) having a continuous longitudinal projection constituting a welding projection (3), such that the front rods (1) and the supporting rods (2) have a substantially triangular cross-section,
wherein each welding projection (3, 6) is located at a vertex of the substantially triangular cross-section, wherein the welding projections (3) of the front rods (1) and the welding projections (6) of the supporting rods (2) comprise at their welding site an accumulated mass of the metallic coating (4) which is bigger than the mass of the coating on the remaining surface of the rod, wherein the coating actively forms a shield for the weld during joining the front rods (1) with the supporting rods (2) of the grid (S) by projection welding.

2. The grid according to claim 1, **characterized in that** also the welding projections (6) of the supporting rods (2) comprise at their welding site an accumulated increased mass of the metallic coating (4) actively forming a shield for the weld during joining the suppurating rods (2) with the front rods (1) of the grid (S) by projection welding.

3. The grid according to claim 1 or 2, **characterized in that** the metallic coating is a zinc-aluminum alloy.

4. The grid according to claim 1 or 2, **characterized in that** the metallic coating is an aluminum-silicon alloy.

5. The grid according to claim 1 or 2 or 3, **characterized in that** the front rods (1) have the same cross-section as the supporting rods (2).

6. A method of manufacturing a metalized grid for architectural structures, the grid consisting of front rods and supporting rods crossing one another, where the front rods (1) are joined by projection welding with the supporting rods (2), the front rods and the supporting rods being made of metalized carbon steel with a metallic coating, **characterised in that**
each front rod (1) and each supporting rod (2) has a continuous longitudinal projection constituting a welding projection (3, 6), such that the front rods (1) and the supporting rods (2) have a substantially triangular cross-section, wherein each welding projection (3, 6) is located at a vertex of the substantially triangular cross-section, wherein the welding projections (3) of the front rods (1) and the welding projections (6) of the supporting rods (2) comprise at their welding site an accumulated mass of the metallic coating (4) which is bigger than the mass of the coating on the remaining surface of the rod, wherein a shield for the weld is actively formed of the accumulated mass of the coating (4) during the projection welding of the front rods (1) with the supporting rods (2) of the grid (S).

## Patentansprüche

1. Ein metallisiertes Gitter für architektonische Konstruktionen, bestehend aus sich kreuzenden Vorderstäben und Stützstäben, wobei das Gitter durch Buckelschweißen der Vorderstäbe (1) mit den Stützstäben (2) hergestellt wird, die Vorderstäbe und die Stützstäbe aus metallisiertem Kohlenstoffstahl mit einer metallischen Beschichtung (4) bestehen, **gekennzeichnet durch** jeden Vorderstab (1) und jeden Stützstab (2) mit einem durchgehenden Längsvorsprung, der einen Schweißvorsprung (3) bildet, so dass die Vorderstäbe (1) und die Stützstäbe (2) einen im Wesentlichen dreieckigen Querschnitt haben, wobei sich jeder Schweißvorsprung (3, 6) an einem Scheitelpunkt des im Wesentlichen dreieckigen Querschnitts befindet, wobei die Schweißvorsprünge (3) der Vorderstäbe (1) und die Schweißvorsprünge (6) der Stützstäbe (2) an ihrer Schweißstelle eine angesammelte Masse der metallischen Beschichtung (4) aufweisen, die größer ist als die Masse der Beschichtung auf der restlichen Oberfläche des Stabs, wobei die Beschichtung aktiv eine Abschirmung für die Schweißnaht während des Verbindens der Vorderstäbe (1) mit den Stützstäben (2) des Gitters (S) durch Buckelschweißen bildet.

2. Das Gitter nach Anspruch 1, **dadurch gekennzeichnet, dass** auch die Schweißvorsprünge (6) der Stützstäbe (2) an ihrer Schweißstelle eine angesammelte erhöhte Masse der metallischen Beschichtung (4) aufweisen, die während des Verbindens der Stützstäbe (2) mit den Vorderstäben (1) des Gitters (S) durch Buckelschweißen aktiv eine Abschirmung für die Schweißnaht bildet.

3. Das Gitter nach Anspruch 1 oder 2, **dadurch gekennzeichnet, dass** die metallische Beschichtung eine Zink-Aluminium-Legierung ist.

4. Das Gitter nach Anspruch 1 oder 2, **dadurch gekennzeichnet, dass** die metallische Beschichtung eine Aluminium-Silizium-Legierung ist.

5. Das Gitter nach Anspruch 1 oder 2 oder 3, **dadurch gekennzeichnet, dass** die Vorderstäbe (1) den gleichen Querschnitt wie die Stützstäbe (2) haben.

6. Ein Verfahren zur Herstellung eines metallisierten Gitters für architektonische Konstruktionen, wobei das Gitter aus sich kreuzenden Vorderstäben und Stützstäben besteht, wobei die Vorderstäbe (1) durch Buckelschweißen mit den Stützstäben (2) verbunden werden, die Vorderstäbe und die Stützstäbe aus metallisiertem Kohlenstoffstahl mit einer metallischen Beschichtung bestehen, **dadurch gekennzeichnet, dass** jeder Vorderstab (1) und jeder Stützstab (2) einen durchgehenden Längsvorsprung aufweist, der einen Schweißvorsprung (3, 6) bildet, so dass die Vorderstäbe (1) und die Stützstäbe (2) einen im Wesentlichen dreieckigen Querschnitt haben, wobei sich jeder Schweißvorsprung (3, 6) an einem Scheitelpunkt des im Wesentlichen dreieckigen Querschnitts befindet, wobei die Schweißvorsprünge (3) der Vorderstäbe (1) und die Schweißvorsprünge (6) der Stützstäbe (2) an ihrer Schweißstelle eine angesammelte Masse der metallischen Beschichtung (4) aufweisen, die größer ist als die Masse der Beschichtung auf der restlichen Oberfläche des Stabs, wobei die Abschirmung der Schweißnaht aktiv aus der angesammelten Masse der Beschichtung (4) beim Buckelschweißen der Vorderstäbe (1) mit den Stützstäben (2) des Gitters (S) gebildet wird.

## Revendications

1. Une grille métallisée pour structures architecturales, composée de tiges frontales et de tiges de support entrecroisées, la grille étant réalisée par soudage par bossage des tiges frontales (1) avec les tiges de support (2), les tiges frontales et les tiges de support étant en acier au carbone métallisé avec un revêtement métallique (4), **caractérisé en ce que** chaque tige frontale (1) et chaque tige de support (2) ont une saillie longitudinale continue constituant une bosse de soudage (3) de sorte que les tiges frontales (1) et les tiges de support (2) ont une section transversale sensiblement triangulaire, chaque bosse de soudage (3, 6) étant située à un sommet de la section transversale sensiblement triangulaire, les bosses de soudage (3) des tiges frontales (1) et les bosses de soudage (6) des tiges de support (2) comprenant sur leur point de soudage une masse accumulée du revêtement métallique (4) qui est supérieure à la masse du revêtement sur la surface restante de la tige, le revêtement formant activement un écran de protection pour la soudure pendant l'assemblage par soudure par bossage des tiges frontales (1) avec les tiges de support (2) de la grille (S).

2. La grille selon la revendication 1, **caractérisée en ce que** les bosses de soudage (6) des tiges de support (2) comprennent également sur leur point de soudage une masse accrue accumulée du revêtement métallique (4) formant activement un écran de protection pour la soudure pendant l'assemblage par soudage par bossage des tiges de support (2) avec les tiges frontales (1) de la grille (S).

3. La grille selon la revendication 1 ou 2, caractéristique en ce que le revêtement métallique est un alliage zinc-aluminium.

4. La grille selon la revendication 1 ou 2, caractéristique en ce que le revêtement métallique est un alliage aluminium-silicium.

5. La grille selon la revendication 1 ou 2 ou 3, **caractérisée en ce que** les tiges frontales (1) ont la même section transversale que les tiges de support (2).

6. Un procédé de fabrication d'une grille métallisée pour structures architecturales, la grille étant composée de tiges frontales et de tiges de support entrecroisées, les tiges frontales (1) étant assemblées par soudage par bossage avec les tiges de support (2), les tiges frontales et les tiges de support étant en acier au carbone métallisé avec un revêtement métallique, **caractérisé en ce que** chaque tige frontale (1) et chaque tige de support (2) ont une saillie longitudinale continue constituant une bosse de soudage (3, 6), de sorte que les tiges frontales (1) et les tiges de support (2) ont une section transversale sensiblement triangulaire, chaque bosse de soudage (3, 6) étant située à un sommet de la section transversale sensiblement triangulaire, les bosses de soudage (3) des tiges frontales (1) et les bosses de soudage (6) des tiges de support (2) comprenant sur leur point de soudage une masse accumulée du revêtement métallique (4) qui est supérieure à la masse du revêtement sur la surface restante de la tige, un écran de protection pour la soudure étant formé activement de la masse accumulée du revêtement (4) pendant l'assemblage par soudage par bossage des tiges frontales (1) avec les tiges de support (2) de la grille (S).
